(19) Europäisches Patentamt
European Patent Office
Office européen des brevets

(11) **EP 3 879 428 A1**

(12) **EUROPEAN PATENT APPLICATION**

(43) Date of publication:
**15.09.2021 Bulletin 2021/37**

(51) Int Cl.:
**G06F 40/295** (2020.01)

(21) Application number: **20382188.9**

(22) Date of filing: **13.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kanagawa 211-8588 (JP)**

(72) Inventors:
• **GARCIA SANTA, Nuria**
**28010 Madrid (ES)**

• **CETINA, Kendrick**
**28010 Madrid (ES)**

(74) Representative: **Haseltine Lake Kempner LLP**
**Cheapside House**
**138 Cheapside**
**London EC2V 6BJ (GB)**

Remarks:
Amended claims in accordance with Rule 137(2) EPC.

(54) **ENABLING COMBINED USE OF NATURAL LANGUAGE PROCESSING MODELS IN A SECURE ENVIRONMENT**

(57) A computer-implemented secure natural language processing (NLP) method comprises: causing a plurality of independent NLP models, distributed in a decentralized architecture where direct access to data in the NLP models is not permitted, to analyze a corpus of unstructured texts in which different types of entity are annotated, and receiving first results of the analysis of the NLP models; for each entity type annotated in the corpus, automatically determining a decision threshold for each NLP model using the received first results; causing the NLP models to analyze an unstructured text in which entities are unannotated and receiving second results of the analysis of the NLP models; applying the determined decision thresholds to the second results to determine which of those second results are valid; and outputting, in respect of the unannotated unstructured text, the second results determined in the validity determination to be valid.

Fig. 1

**Description**

Embodiments relate to enabling the combined use of Natural Language Processing (NLP) models in a secure environment.

NLP techniques include entity recognition, relations extraction, text categorization and topics extraction. For example, Named Entity Recognition (NER) is an important technique in the fields of Natural Language Processing (NLP) and Text Mining. NER models aim to detect and extract named entities of different types in unstructured texts. These entities are units like names (including persons, organizations and locations) and numeric expressions (including time, date, money and percent expressions). NER methods have been included as an important subtask of Information Extraction (IE) where structured data is retrieved from unstructured texts.

Ensuring the privacy, security and confidentiality of data is nowadays essential in most enterprises. Many critical infrastructures in banking, healthcare, insurance, etc. require architectures where the data, models and resources are protected from external individuals and organizations, and therefore the information is decoupled from external access, often by decentralizing components and modules, i.e. providing a system in which lower level components operate on local information to accomplish global goals. The main idea of decentralized environments is the absence of a single point where a decision is made. Every node makes a decision for its own behaviour and the resulting system behaviour is the aggregate response. The local decision of each component will influence the overall decision of the system. A key characteristic is that typically no single node will have complete system information.

In some circumstances it may be desirable to have a decentralized system involving a plurality of independent NLP models, so as to ensure that the NLP models, and the data they contain, are kept private for security or confidentiality reasons, but where the outcomes from the individual NLP models may be combined effectively.

An embodiment of a first aspect provides a computer-implemented secure natural language processing (NLP) method comprising: causing a plurality of independent NLP models, distributed in a decentralized architecture where direct access to data in the NLP models is not permitted, for example for data security reasons, to analyze a corpus of unstructured texts in which different types of entity are annotated, and receiving first results of the analysis of the NLP models; for each entity type annotated in the corpus, automatically determining a decision threshold for each NLP model using the received first results; causing the NLP models to analyze an unstructured text in which entities are unannotated and receiving second results of the analysis of the NLP models; applying the determined decision thresholds to the second results to determine which of those second results are valid; and outputting, in respect of the unannotated unstructured text, the second results determined in the validity determination to be valid.

An embodiment of a second aspect provides secure natural language processing (NLP) apparatus comprising: an automatic decision threshold determiner to: cause a plurality of independent NLP models, distributed in a decentralized architecture where direct access to data in the NLP models is not permitted, for example for data security reasons, to analyze a corpus of unstructured texts in which different types of entity are annotated, and receive first results of the analysis of the NLP models; and for each entity type annotated in the corpus, automatically determine a decision threshold for each NLP model using the received first results; and a text analyzer to: cause the NLP models to analyze an unstructured text in which entities are unannotated and receive second results of the analysis of the NLP models; apply the determined decision thresholds to the second results to determine which of those second results are valid; and output, in respect of the unannotated unstructured text, the second results determined in the validity determination to be valid.

In the context of this application, a decision threshold value is the value of a decision making variable at which a decision is made, such that an action is selected or a commitment to one alternative is made, i.e. in NER the value needed to discriminate if an entity belongs to one type or another. As each NLP model is trained with a particular dataset and neural network design which is likely to be different to those used for another NLP model, each NLP model has its own specific decision threshold value. In order to maximize the combined outcomes of a plurality of NLP models, it is necessary to determine the decision threshold values of the NLP models which will optimize the combined outcomes. Embodiments allow decision thresholds for a plurality of independent NLP models in a decentralized environment to be determined automatically without the need to access the data of the origin models, nor to the methodology for building the NLP models. In this way a plurality of NLP models may be used in a decentralized environment such that the quality of results and performance of the combined NLP models is high and independent NLP models may be well-integrated, whilst preserving security/confidentiality of the data and the models. In addition, time and human resources may be saved.

In a method embodying the first aspect, automatically determining a decision threshold may comprise: for each type of entity annotated in the corpus, comparing the first results provided by the NLP models with the annotations in the corpus to obtain a set of values representing whether or not the entities in the corpus have been correctly identified by the NLP models; for each of the entity types for which a set of values has been obtained, using the set of values to determine sensitivity and specificity for each NLP model; and using the determined sensitivity and specificity to determine an optimal decision threshold by entity type, for each NLP model, which maximizes correlation between the sensitivity and the specificity.

Determining an optimal decision threshold by entity type for each NLP model may comprise: calculating an average between the sensitivity and specificity values obtained for the entity type with the NLP model. The average may be calculated using weighted sensitivity and specificity values.

Causing the plurality of independent NLP models to analyze a corpus of unstructured texts may comprise sending each text in the corpus to each of the NLP models.

Causing the plurality of independent NLP models to analyze an unannotated text may comprise sending the unannotated text to each of the NLP models.

In a method embodying the first aspect, applying the determined decision thresholds to the second results to determine which of those second results are valid comprises: for each of the second results, using an accuracy value, representing the percentage of valid results provided by the corresponding NLP model, and a confidence measure provided by that NLP model for the result to calculate a score; for each of the second results, comparing the score calculated for the result with the determined decision threshold for the entity type and NLP model corresponding to the result; and determining that the result is valid if the score is equal to or greater than the determined decision threshold.

In apparatus embodying the second aspect, the automatic decision threshold determiner automatically determines a decision threshold by: for each type of entity annotated in the corpus, comparing the first results provided by the NLP models with the annotations in the corpus to obtain a set of values representing whether or not the entities in the corpus have been correctly identified by the NLP models; for each of the entity types for which a set of values has been obtained, using the set of values to determine sensitivity and specificity for each NLP model; and using the determined sensitivity and specificity to determine an optimal decision threshold by entity type, for each NLP model, which maximizes correlation between the sensitivity and the specificity.

The automatic decision threshold determiner may determine an optimal decision threshold by entity type for each NLP model by calculating an average between the sensitivity and specificity values obtained for the entity type with the NLP model. At least one of the sensitivity value and the specificity value may be weighted in calculating the average.

The automatic decision threshold determiner may cause the plurality of independent NLP models to analyze a corpus of unstructured texts by sending each text in the corpus to each of the NLP models.

The text analyzer may cause the plurality of independent NLP models to analyze an unannotated text by sending the unannotated text to each of the NLP models.

The text analyzer may determine which of the second results is valid by: for each of the second results, using an accuracy value, representing the percentage of valid results provided by the corresponding NLP model, and a confidence measure provided by that NLP model for the result to calculate a score; for each of the second results, comparing the score calculated for the result with the determined decision threshold for the entity type and NLP model corresponding to the result; and determining that the result is valid if the score is equal to or greater than the determined decision threshold. In a method embodying the first aspect or apparatus embodying the second aspect, at least one of the NLP models is a Named Entity Recognition (NER) model.

An embodiment provides a computer program which, when run on a computer, carries out a method embodying the first aspect.

Reference will now be made, by way of example, to the accompanying drawings, in which:

Figure 1 is a block diagram of apparatus embodying the second aspect;
Figure 2 is a flowchart of a method embodying the first aspect;
Figure 3 is a flowchart of a method in accordance with an embodiment;
Figure 4 is a flowchart of processes in accordance with an embodiment;
Figure 5 shows an example of a confusion matrix;
Figure 6 is a flowchart of a process in accordance with an embodiment; and
Figure 7 a block diagram of a computing device suitable for carrying out a method according to an embodiment.

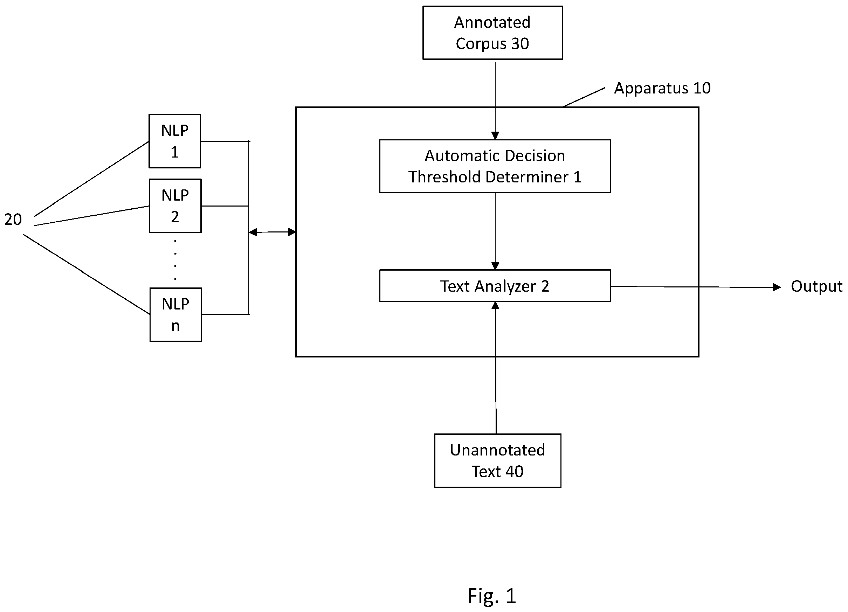

As shown in Figure 1, secure natural language processing (NLP) apparatus 10 comprises an automatic decision threshold determiner 1 and a text analyzer 2. Automatic decision threshold determiner 1 is configured to cause a plurality 20 of independent NLP models to analyze a corpus 30 of unstructured texts in which different types of entity are annotated, the plurality 20 of independent NLP models being distributed in a decentralized architecture where direct access to data in the NLP models 20 is not permitted. The automatic decision threshold determiner 1 is configured to receive first results of the analysis of the NLP models 20, and, for each entity type annotated in the corpus 30, automatically determine a decision threshold for each NLP model using the received first results. Text analyzer 2 is configured to cause the plurality 20 of NLP models to analyze an unstructured text 40 in which entities are unannotated and receive second results of the analysis of the NLP models 20. The text analyzer 2 is configured to apply the determined decision thresholds to the second results to determine which of those second results are valid, and output, in respect of the unannotated unstructured text 40, the second results determined in the validity determination to be valid.

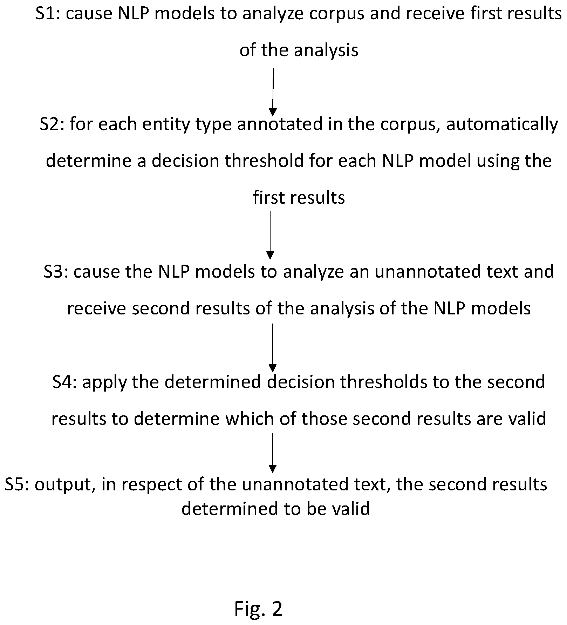

Figure 2 is a flowchart of a method carried out by the apparatus of Figure 1.

At step 1 of the method, the plurality 20 of independent NLP models, distributed in a decentralized architecture where direct access to data in the NLP models 20 is not permitted, are caused by the automatic decision threshold determiner 1 to analyze the corpus 30 of unstructured texts in which different types of entity are annotated, and first results of the analysis of the NLP models 20 are received by the automatic decision threshold determiner 1. Causing the plurality 20 of independent NLP models to analyze the corpus 30 of unstructured texts may comprise the automatic decision threshold determiner 1 sending each text in the corpus 30 to each of the NLP models 20.

At step 2, for each entity type annotated in the corpus 30, the decision threshold for each NLP model is automatically determined by the automatic decision threshold determiner 1 using the received first results. Determining the decision threshold may comprise, for each type of entity annotated in the corpus 30, the automatic decision threshold determiner 1 comparing the first results provided by the NLP models 20 with the annotations in the corpus 30 to obtain a set of values representing whether or not the entities in the corpus 30 have been correctly identified by the NLP models 20, and then, for each of the entity types for which a set of values has been obtained, using the set of values to determine sensitivity and specificity for each NLP model. The determined sensitivity and specificity may then be used by the automatic decision threshold determiner 1 to determine an optimal decision threshold by entity type, for each NLP model, which maximizes correlation between the sensitivity and the specificity. An optimal decision threshold by entity type for each NLP model may be determined by the automatic decision threshold determiner 1 by calculating an average between the sensitivity and specificity values obtained for the entity type with the NLP model.

At step 3, the NLP models 20 are caused by the text analyzer 2 to analyze the unstructured text 40 in which entities are unannotated and second results of the analysis of the NLP models 20 are received by the text analyzer 2, for example by text analyzer 2 sending the unannotated text 40 to each of the NLP models 20.

At step 4, the determined decision thresholds are applied by the text analyzer 2 to the second results to determine which of those second results are valid. This may comprise the text analyzer 2 ascertaining, for each NLP model, an accuracy value representing the percentage of valid results provided by the NLP model, and then, for each of the second results, using the accuracy value for the corresponding NLP model and a confidence measure provided by that NLP model for the result to calculate a score. For each of the second results, the score calculated for the result may be compared by the text analyzer 2 with the determined decision threshold for the entity type and NLP model corresponding to the result. The result is determined by the text analyzer 2 to be valid if the score is equal to or greater than the determined decision threshold.

At step 5, the second results determined in the validity determination to be valid in respect of the unannotated unstructured text are output by the text analyzer 2.

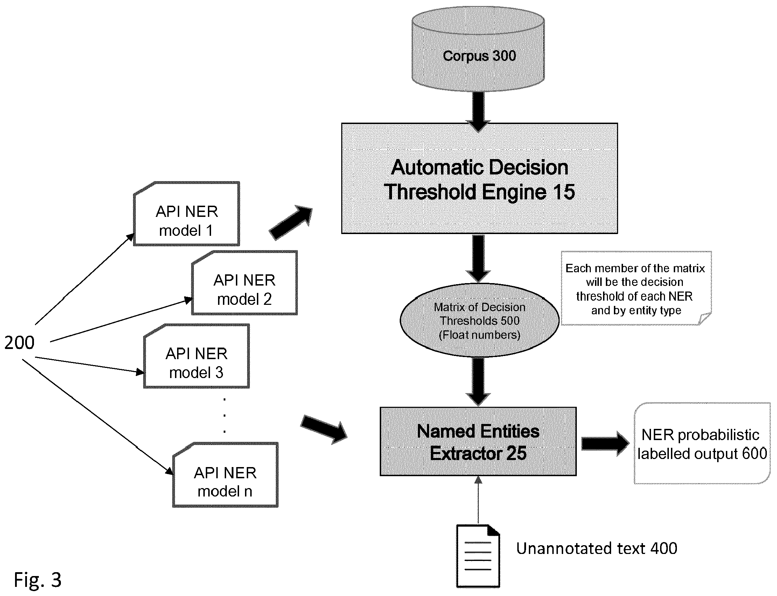

An embodiment for use with Named Entity Recognition (NER) models will now be described with reference to Figures 3, 4 and 5. Figure 3 shows:

1. Inputs:

    a. Inputs 1:

        Application Programming Interfaces (APIs) to a plurality 200 of independent NER models 1 to n in a decentralized environment with the minimal information required in order for the NER models to be consulted; a small corpus 300 of unstructured texts annotated with different entities for the different domains

    b. Input 2: An unstructured text 400 for the later analysis of new cases

2. Automatic Decision Threshold Determiner 1, comprising Automatic Decision Threshold Determination Engine 15, and Text Analyzer 2, comprising a Named Entities Extractor 25.

The Automatic Decision Threshold Determination Engine 15 determines decision thresholds to enable combination of the results of the plurality 200 of independent NER models in the decentralized environment.

The Named Entities Extractor 25 takes the determined decision thresholds as the discriminator values to decide for the input unstructured text 400 the entities recognized.

3. Outputs:

    a. Intermediate output: A matrix 500 of the decision thresholds determined automatically by the Automatic Decision Threshold Determination Engine 15. Each member of the matrix will be the decision threshold of each NER and by entity type.

    b. Final output: The final result is a probabilistic vector of entities 600 with its type from the combined results of the plurality 200 of NER models of those ones that overcome the threshold defined through this approach (NER probabilistic labelled output)

**Automatic Decision Threshold Determination Engine 15**

The Automatic Decision Threshold Determination Engine 15 is configured to calculate a decision threshold for the combined results of the plurality 200 of independent NER models in a decentralized environment. This module generates a matrix of determined decision thresholds, comprising decimal values between 0 and 1, such that each member of the matrix is the determined decision threshold of each NER model by entity type that will maximize the performance of the combined NER models. These decision threshold values are used later to discriminate if an entity belongs to one type or another for the processing of new unstructured texts within this decentralized architecture.

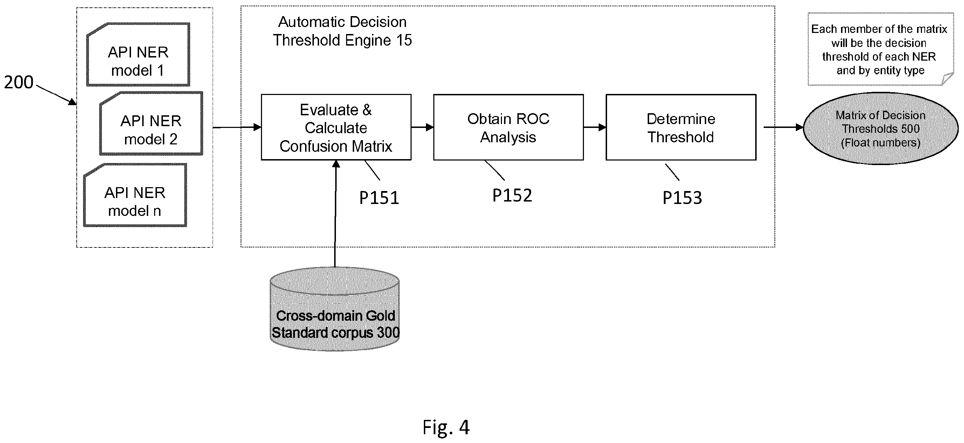

Figure 4 shows the workflow of an embodiment of the Automatic Decision Threshold Determination Engine 15, which has the following inputs:

- APIs to the plurality 200 of independent NER models with the minimal information required in order for the NER models to be consulted
- Small corpus 300 of unstructured texts annotated with different entities for the different domains (for example texts in the healthcare domain with entities of type Disease, Drug, Treatment, etc., texts in the finance domain with entities of type Organization, Brand, Product, etc., texts in the general domain with entities of type Location, Person, Time, etc., but as in this embodiment ideally a Cross-domain Gold Standard corpus having as far as possible text examples of different domains so as to have a wide spectrum)

The procedure carried out by the Automatic Decision Threshold Determination Engine 15 comprises three processes, P151, P152 and P153.

Process 151 - Evaluate & Calculate Confusion Matrix 1000:

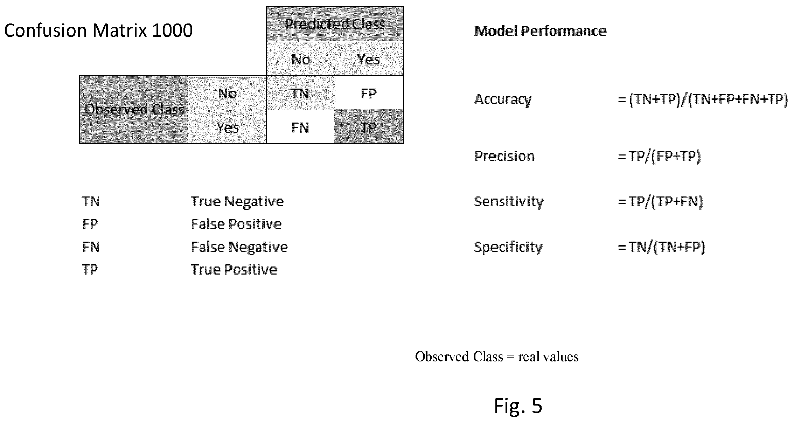

In this process a Confusion Matrix 1000 (a table that may be used to describe the performance of a classification model on a set of test data for which true values are known) by entity type is created for each input NER model, for example as shown in Figure 5. This activity requires:

a. APIs of the NER models 200 with the following information for each one:

- URL of the API
- HTTP method (get, post)
- Format of request message body
- Entity types managed by the NER (e.g. disease, drug, species, location, etc.)
- [Optional] Accuracy score of each NER by entity type (these values, if they are available, will be used later by the component *Named Entities Extractor)*

b. Small corpus 300 of unstructured texts annotated with entities (in this example a cross-domain Gold Standard corpus)

First, over the small corpus 300 of unstructured texts annotated with entities, each text is analyzed against each NER model, to obtain the results needed for the following evaluation of the result predicted by the NER models with the real values annotated in the corpus. HTTP calls are made to each API sending each text to get the results of the named entities recognized by the NER models.

Second, for each entity type managed by the NER models 200 the results are collected, and the predicted and real values for each NER are compared and assessed in accordance with the following relationships:

■ True Positives (TP): An entity is annotated as being a particular type in both the gold-standard corpus and the NER model
■ False Positives (FP): An entity is annotated as being a particular type in the NER model but not in the gold-standard corpus
■ False Negatives (FN): An entity is annotated as being a particular type in the gold-standard corpus but not in the NER model
■ True Negatives (TN): An entity is not annotated in the gold-standard corpus and not annotated in the NER model

For each entity type and NER, in every text, the parameters (TP, FP, FN or TN) for that text will be marked with value 1 if the result corresponds to one of the above relationships, otherwise with value 0. The overall value of each parameter will be the sum of the values for each text and these overall values will form the Confusion Matrix 1000 for the entity type concerned.

Third, once all the results have been evaluated, for each entity type there will be a number of Confusion Matrices 1000 equal to the number of NER models to be combined.

Process 152 - Obtain ROC Analysis:

In this process Receiver Operating Characteristic (ROC) analysis is carried out for each entity type and each NER model. ROC analysis considers the decision ability of a classifier system as its discrimination threshold is varied and is used to determine an optimal decision threshold for relative costs of false positive and false negative errors using the relationship between the parameters sensitivity and specificity. These parameters are obtained from the calculation of the Confusion Matrices. Sensitivity (also known as recall or True Positive Rate, TPR) is the result of the fraction of true positives (TP) by the sum of true positives (TP) and false negatives (FN), i.e. TP/(TP+FN). Specificity (also known as True Negative Rate, TNR) is the result of the fraction of true negatives (TN) by the sum of true negatives (TN) and false positives (FP), i.e. TN/(TN+FP). An ROC curve is the plot of sensitivity (SN) versus false positive rate (FPR) (or 1 - specificity); each point of the curve corresponds to a different threshold that separates the negative samples from the positive samples.

For each entity type the sensitivity and specificity for each NER model is calculated using the values of the associated Confusion Matrix 1000 created in the previous step, to obtain the ROC relationships for these two parameters.

Process 153 - Determine Threshold:

In this process each NER decision threshold by entity type is determined. The previously-obtained mathematical ROC relationships will be used for automatic decision threshold determination.

Values for sensitivity and specificity derived from the ROC relationships are compared to determine an optimal decision threshold by entity type for each NER model which maximizes correlation between the sensitivity and the specificity.

The optimal decision threshold is calculated taking the results of sensitivity and specificity for each NER model from the previous step and taking an average between them with respective parameter deviations q and r, for example:

$$\frac{q * Specificity + r * Sensitivity}{2}$$

The values of parameter deviations q and r will depend on the importance in the model of sensitivity or specificity. If for example sensitivity is to be prioritized, the deviation applied will weight the value of sensitivity more heavily as compared to specificity. For instance:

Using a value of *q=0.95* for specificity and *r=1* for sensitivity, where:

sensitivity = 1 and specificity = 0.75

$$\frac{0.95 * 0.75 + 1}{2} = 0.85 = \textit{Optimal Threshold}$$

Before calculating the optimal threshold value, a value t1, which is the largest decision threshold such that the corresponding sensitivity (SN) meets the specified sensitivity level, and a value t2, which is the smallest decision threshold such that the corresponding specificity (SP) meets the desired specificity level, are chosen. By way of example only, to avoid a very high or a very low threshold, for each entity type the minimum possible threshold value t2 may be 0.3 and the maximum possible threshold value t1 may be 0.9. If instead in the above example both sensitivity and specificity = 1, the threshold calculated in the above manner would be 0.97, but this would exceed the value of the maximum threshold value t1=0.9, so the optimal threshold would be determined to be equal to t1.

At completion of these three processes 151, 152, 153 a decision threshold will have been determined for each NER model by entity type (a matrix 500 of determined decision thresholds); these decision thresholds will have been obtained through the joint analysis of the common gold standard corpus 300.

**Named Entities Extractor 25**

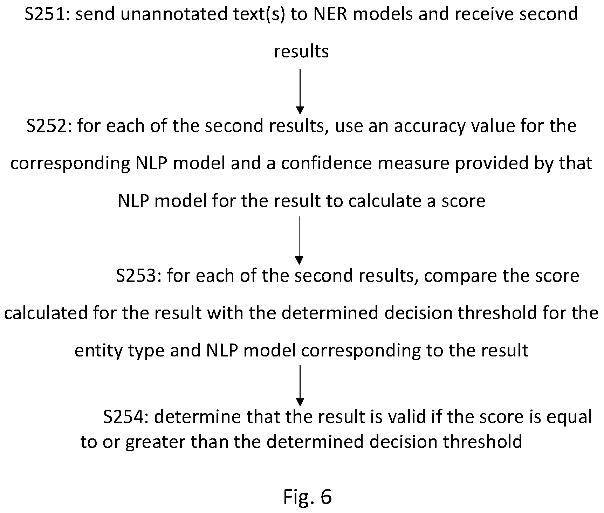

This component employs the matrix 500 of determined decision thresholds to provide an improved performance in the discrimination by entity type of the independent NER models 200. The Named Entities Extractor 25 takes the determined decision thresholds as discriminator values to decide for an input unstructured text 400 the entities recognized combining the independent NER models 200. As shown in Figure 6, for this activity at least one new unstructured text 400 (the one or ones to be analyzed in order to recognize named entities) is input and HTTP calls are made to each API sending the or each text to get the results of the named entities recognized, i.e. a list of named entities recognized with its internal score (step S251). These results are discriminated by entity type using the matrix 500 of determined decision thresholds belonging to the different NER models. For each NER, over its list of named entities recognized, the value of the following formula is calculated (step S252):

$$Score_{final} = IntScore_{ent} * Acc_{ent}$$

where,

*IntScore$_{ent}$ is the internal score of confidence provided by the NER* (this score is provided in the results received from each API NER)
*Acc$_{ent}$ is the accuracy of the NER*

*Acc$_{ent}$,* i.e. the accuracy of the NER model, may be provided by the origin NER model to indicate its performance. If this value is not provided, the accuracy over the common gold standard corpus will be calculated.

Next, for each NER and entity type, a check is made (step S253) using the corresponding decision threshold to see if the value of the *Score$_{final}$* is higher than the threshold (positive discrimination); if so (step S254) then that named entity will be kept, but if it is lower (negative discrimination), then the named entity will be rejected.

At the completion of this process a probabilistic vector 600 (NER probabilistic labelled output) of those entities that meet the decision threshold is output.

**Example**

An example of how an embodiment may be applied to automatically determine a decision threshold for obtaining an improved combination of pharmacological entities from independent NER models will now be described. This example should not be construed as limiting in any way, as embodiments may be used with NER models for any domain, even general-purpose NER models.

The workflow of this worked example is as follows:
Inputs:

- Information concerning two independent API NER models:

  ■ URL API NER 1: http://www.../medical-ner
  ■ HTTP method NER 1: post
  ■ Message body NER 1: JSON input {text:string, lang:string}
  ■ Entity types managed NER 1: disease, drug, symptom, chemical
  ■ Accuracy score by entity type:

    ■ Disease: 86%
    ■ Drug: 74%
    ■ Symptom: 68%
    ■ Chemical: 81%

  ■ URL API NER 2: http://www.../mner
  ■ HTTP method NER 2: get
  ■ Message body NER 2: JSON input {text:string}
  ■ Entity types managed NER 2: disease, drug, chemical, treatment
  ■ Accuracy score by entity type:

    ■ Disease: 79%
    ■ Drug: 82%
    ■ Chemical: 77%
    ■ Treatment: 65%

- Small corpus of unstructured texts annotated with the kind of entities managed by the NER models (disease, drug, symptom, chemical and treatment). An excerpt of this corpus is given below:

> ("GI/ GU: EGD revealed ulcerations; gastritis; no active bleeding.", {"entities": [(21, 32, "Symptom")]}),
> ("HOSPITAL COURSE: RESPIRATORY: **Date Range 59057** did not have respiratory distress.", {"entities": [(64, 84, "Symptom")]}),
> ("She also had not been informed of the serum creatinine result and was very concerned that 0.9 was abnormal and indicative of renal failure.", {"entities": [(125, 138, "Symptom"), (42, 52, "Chemical")]}), [TEXT 1]
> ("L Leg PIV infusing D10W with lytes at 30cc/k/d.", {"entities": [(19, 23, "DRUG")]}),
> ("Mom verbalizing concerns and anxiety over infants recent bradycardic episode.", { "entities": [(29, 36, "Symptom")]}),
> ("Monitoring for apnea.", {"entities": [(15, 20, "Symptom")]}),
> ("Apnea well-controlled on caffeine.", {"entities": [(0, 5, "Symptom")]}),
> ("Alternatively; this could be secondary to the portal hypertension.", {"entities": [(46, 65, "DISEASE")]}),
> ("The right upper chest and pre-existing hemodialysis catheter were prepped and draped in the standard sterile fashion.", {"entities": [(39, 51, "Treatment")]}),
> ("The fate of LSD in the body: forensic considerations.", {"entities": [(12, 15, "Chemical")]}),
> "[Therapy of hepatic encephalopathy.", {"entities": [(12, 34, "Disease")]}),
> ("Modification of the plasma aminogram using amino acid infusions].", {"entities": [(27, 36, "Chemical'),(43, 53, "Chemical")]}), [TEXT 2]
> ("However, the same carboxyl group (pKa 4.2--4.8)", {"entities": [(18, 26, "Chemical")]}),
> ("Isolation and some properties of megamitochondria from the cuprizone-treated mouse liver.", {"entities": [(59, 68, "Chemical"),(0, 9, "Treatment")]}),
> ("Aortography demonstrated the presence of a suspected ilio-caval fistula.", {"entities": [(64, 71, "Disease"),(0, 11, "Treatment")]}) [TEXT 3]

As indicated above, each portion of text in the corpus is annotated to show different entities recognized in the text, with the entity type and its position within the text.

Procedure:

**1. Evaluate & Calculate Confusion Matrix:**

First, HTTP calls to each of the two NER models analyzing the texts of the input corpus are made and the results noted. An example for texts 1, 2 and 3 of the corpus is shown below:

Text 1: *She also had not been informed of the serum creatinine result and was very concerned that 0.9 was abnormal and indicative of renal failure.*

POST call to URL API NER 1 wit message body:

{"lang":"en", "text": "*She also had not been informed of the serum creatinine result and was very concerned that 0.9 was abnormal and indicative of renal failure.*"}

Results:

"namedEntities": [

{

"name": "creatinine",

"type": "CHEMICAL",

"score": 0.72

},

{

"name": "abnormal",

"type": " SYMPTOM ",

"score": 0.38

},

{

"name": "renal failure",

"type": "SYMPTOM",

"score": 0.88

}

]

GET call to URL API NER 2 wit message body:

{"text": "*She also had not been informed of the serum creatinine result and was very concerned that 0.9 was abnormal and indicative of renal failure.*"}

Results:

"namedEntities": []

(i.e. no entities recognized)

Text 2: *Modification of the plasma aminogram using amino acid infusions*

POST call to URL API NER 1 wit message body:

{"lang":"en", "text": "*Modification of the plasma aminogram using amino acid infusions.*"}

Results:

"namedEntities": [

{

    "name": "plasma",

    "type": "CHEMICAL",

    "score": 0.42

},

{

    "name": "aminogram",

    "type": "CHEMICAL",

    "score": 0.7

},

{

    "name": "amino acid",

    "type": "CHEMICAL",

    "score": 0.91

}

]

GET call to URL API NER 2 wit message body:

{"text": "*Modification of the plasma aminogram using amino acid infusions.*"}

Results:

"namedEntities": [

{

    "name": "aminogram",

    "type": "CHEMICAL",

    "score": 0.64

},

{

    "name": "amino acid infusions",

    "type": "CHEMICAL",

    "score": 0.56

}

],

Text 3: *Aortography demonstrated the presence of a suspected ilio-caval fistula.*

POST call to URL API NER 1 wit message body:

{"lang":"en", "text": "*Aortography demonstrated the presence of a suspected ilio-caval fistula.*"}

Results:

```
"namedEntities": [
    {
            "name": "Aortography",
            "type": "DISEASE",
            "score": 0.57
    },
    {
            "name": "ilio-caval ",
            "type": " SYMPTOM ",
            "score": 0.46
    },
    {
            "name": "fistula",
            "type": "DISEASE",
            "score": 0.77
    }
]
```

GET call to URL API NER 2 wit message body:

{"text": "*Aortography demonstrated the presence of a suspected ilio-caval fistula.*"}

Results:

```
"namedEntities": [
    {
            "name": "Aortography ",
            "type": "TREATMENT",

                                                        "score": 0.85
                                                    }
                                                    ]
```

Second, confusion matrix parameters (TP, FP, FN, TN) are then calculated for each entity and NER model by comparing the predicted results from the NER models with the real values (observed class) included in the annotations of the corpus. Taking the previous examples the following confusion matrices are obtained:

For entity type = Chemical

NER 1:

|  |  | Predicted Class | |
| --- | --- | --- | --- |
|  |  | No | Yes |
| Observed Class | No | TN = 3 | FP = 1 |
|  | Yes | FN = 0 | TP = 3 |

NER 2:

|  |  | Predicted Class | |
| --- | --- | --- | --- |
|  |  | No | Yes |
| **Observed Class** | No | TN = 3 | FP = 1 |
|  | Yes | FN = 2 | TP = 1 |

For entity type = Symptom
NER 1:

|  |  | Predicted Class | |
| --- | --- | --- | --- |
|  |  | No | Yes |
| **Observed Class** | No | TN = 5 | FP = 2 |
|  | Yes | FN = 0 | TP = 1 |

NER 2:

|  |  | Predicted Class | |
| --- | --- | --- | --- |
|  |  | No | Yes |
| **Observed Class** | No | TN = 5 | FP = 0 |
|  | Yes | FN = 1 | TP = 0 |

For entity type = Disease
NER 1:

|  |  | Predicted Class | |
| --- | --- | --- | --- |
|  |  | No | Yes |
| **Observed Class** | No | TN = 4 | FP = 1 |
|  | Yes | FN = 0 | TP = 1 |

NER 2:

| | | Predicted Class | |
|---|---|---|---|
| | | No | Yes |
| Observed Class | No | TN = 5 | FP = 0 |
| | Yes | FN = 1 | TP = 0 |

For entity type = Treatment
NER 1:

| | | Predicted Class | |
|---|---|---|---|
| | | No | Yes |
| Observed Class | No | TN = 5 | FP = 0 |
| | Yes | FN = 1 | TP = 0 |

NER 2:

| | | Predicted Class | |
|---|---|---|---|
| | | No | Yes |
| Observed Class | No | TN = 5 | FP = 0 |
| | Yes | FN = 0 | TP = 1 |

For entity type = Drug - Not applicable in these examples

At this point, for each entity type, there are the same number of confusion matrices as the number of NER models. In the example shown there are four entity types with results (i.e. for the entities: chemical, symptom, disease and treatment) and two NER models, so there are a total of eight confusion matrices.

## 2. <u>Obtain ROC Analysis:</u>

The next step is to calculate sensitivity and specificity from the confusion matrix parameters. As mentioned above, sensitivity (recall or True Positive Rate, TPR) is the result of the fraction of true positives divided by the sum of true positives and false negatives [TP/(TP+FN)], and specificity (a.k.a. True Negative Rate, TNR) is the result of the fraction of true negatives by the sum of true negatives and false positives [TN/(TN+FP)].

For entity type = Chemical

| NER 1: | NER 2: |
|---|---|
| Sensitivity = 3/(3+0) = 1 | Sensitivity = 1/(1+2) = 0.33 |
| Specificity = 3/(3+1) = 0.75 | Specificity = 3/(3+1) = 0.75 |

For entity type = Symptom

| NER 1: | NER 2: |
|---|---|
| Sensitivity = 1/(1+0) = 1 | Sensitivity = 0/(0+1) = 0 |
| Specificity = 5/(5+2) = 0.71 | Specificity = 5/(5+0) = 1 |

For entity type = Disease

NER 1:
Sensitivity = 1/(1+0) = 1
Specificity = 4/(4+1) = 0.8

NER 2:
Sensitivity = 0/(0+1) = 0
Specificity = 5/(5+0) = 1

For entity type = Treatment

NER 1:
Sensitivity = 0/(0+1) = 0
Specificity = 5/(5+0) = 1

NER 2:
Sensitivity = 1/(1+0) = 1
Specificity = 5/(5+0) = 1

Therefore there are now for each entity type as many Sensitivity-Specificity measures as NER models, i.e. eight.

### 3. Determine Threshold:

In this step the calculated sensitivity and specificity values are compared to determine an optimal decision threshold by entity type for each NER model which maximizes correlation between the sensitivity and the specificity. The optimal decision threshold is calculated taking the results of sensitivity and specificity for each NER model from the previous step and taking an average between them with respective parameter deviations $q, r$. In this example minimum and maximum possible threshold values are set as 0.3 and 0.9 respectively.

For entity type = Chemical

NER 1:
Decision Threshold = 0.85
(q = 0.95, r = 1)

NER 2:
Decision Threshold = 0.6
(q = 1.5, r = 0.23)

For entity type = Symptom

NER 1:
Decision Threshold = 0.85
(q = 0.98, r = 1)

NER 2:
Decision Threshold = 0.5
(q = 1, r= 1)

For entity type = Disease

NER 1:
Decision Threshold = 0.9
(q=1, r=1)

NER 2:
Decision Threshold = 0.5
(q=1, r=1)

For entity type = Treatment

NER 1:
Decision Threshold = 0.5
(q=1, r=1)

NER 2:
Decision Threshold = 0.9 (as max limit = 0.9)
(q=1, r=1)

The final output of this process is a matrix of adjusted decision thresholds, each member of the matrix corresponding to the decision threshold of a specific NER model by entity type.

|  | Chemical | Symptom | Disease | Treatment |
|---|---|---|---|---|
| **NER 1** | 0.85 | 0.85 | 0.9 | 0.5 |
| **NER 2** | 0.6 | 0.5 | 0.5 | 0.9 |

These results may be applied to the Named Entities Extractor component for analysis of a new unstructured text as follows:

Input: New unstructured text to analyse and recognize named entities. For instance the following text:

*In 82 cases, 6 cases had complications of barotrauma, 39 cases, of infections, 15 cases, of hypotension, 24 cases, of arrhythmia, 14 cases, of upper gastrointestinal hemorrhage and 10 cases, of multiple organ failure.*

HTTP calls are made to each of the two NER models; NER 1 has an accuracy of 0.93 and NER 2 has an accuracy of 0.74.

POST call to URL API NER 1 wit message body:

{"lang":"en", "text": "*In 82 cases, 6 cases had complications of barotrauma, 39 cases, of infections, 15 cases, of hypotension, 24 cases, of arrhythmia, 14 cases, of upper gastrointestinal hemorrhage and 10 cases, of multiple organ failure.*"}

Results:

```
"namedEntities": [
    {
        "name": "barotrauma",
        "type": "DISEASE",
        "score": 0.97
    },
    {
        "name": "hypotension",
        "type": "SYMPTOM",
        "score": 0.94
    },
    {
        "name": "arrhythmia",
        "type": "SYMPTOM",
        "score": 0.93
    },
    {
        "name": "upper gastrointestinal hemorrhage",
        "type": "DISEASE",
        "score": 0.98
    },
```

```
    {
            "name": "multiple organ failure",
            "type": "DISEASE",
            "score": 0.968
    }
    ]
```

GET call to URL API NER 2 wit message body:

{"text": " *In 82 cases, 6 cases had complications of barotrauma, 39 cases, of infections, 15 cases, of hypotension, 24 cases, of arrhythmia, 14 cases, of upper gastrointestinal hemorrhage and 10 cases, of multiple organ failure.*"}

Results:

```
"namedEntities": [
    {
             "name": "infections",
            "type": "DISEASE",
            "score": 0.62
    },
    {
            "name": "hemorrhage ",
            "type": "DISEASE",
            "score": 0.78
    },
    {
            "name": "failure",
            "type": "DISEASE",
            "score": 0.55
    }
    ]
```

These results are then compared by entity type with the matrix of adjusted thresholds determined for the different NER models by calculating the value of the formula $Score_{final} = IntScore_{ent} * Acc_{ent}$ and checking using the corresponding decision threshold to determine if the calculated value is higher than the adjusted threshold (positive discrimination), in which case the entity is said to have been recognized correctly, or lower (negative discrimination), in which case the entity is said to have been recognized incorrectly. For example:

NER 1:

```
{
        "name": "barotrauma",
        "type": "DISEASE",
        "score": 0.97
}
```

$$Score_{final} = 0.97 * 0.93 = 0.9021$$

```
{
        "name": "hypotension",
        "type": "SYMPTOM",
        "score": 0.94
}
```

$$Score_{final} = 0.94 * 0.93 = 0.8742$$

```
{
        "name": "arrhythmia",
        "type": "SYMPTOM",
        "score": 0.93
}
```

$$Score_{final} = 0.93 * 0.93 = 0.8649$$

```
{
        "name": "upper gastrointestinal hemorrhage",
        "type": "DISEASE",
        "score": 0.98
```

```
}
```

$$Score_{final} = 0.98 * 0.93 = \mathbf{0.9114}$$

```
{
        "name": "multiple organ failure",
        "type": "DISEASE",
        "score": 0.968
}
```

$$Score_{final} = 0.968 * 0.93 = \mathbf{0.90024}$$

NER 2:

```
{
        "name": "infections",
        "type": "DISEASE",
        "score": 0.62
}
```

$$Score_{final} = 0.62 * 0.74 = \mathbf{0.4588}$$

```
{
        "name": "hemorrhage ",
        "type": "DISEASE",
        "score": 0.78
}
```

$$Score_{final} = 0.78 * 0.74 = \mathbf{0.5772}$$

```
{
        "name": "failure",
        "type": "DISEASE",
```

"score": 0.55

}

$$Score_{final} = 0.55 * 0.74 = 0.407$$

Taking into account these values and the corresponding adjusted decision thresholds [NER1: Symptom: 0.85, Disease: 0.9; NER2: Symptom: 0.5, Disease: 0.5], the named entities included in the final result by positive discrimination are:

```
[
    {
        "name": "barotrauma",
        "type": "DISEASE",
        "score": 0.9021
    },
    {
        "name": "hypotension",
        "type": "SYMPTOM",
        "score": 0.8742
    },
    {
        "name": "arrhythmia",
        "type": "SYMPTOM",
        "score": 0.8649
    },
    {
        "name": "upper gastrointestinal hemorrhage",
        "type": "DISEASE",
        "score": 0.9114
    },
    {
        "name": "multiple organ failure",
        "type": "DISEASE",
```

"score": 0.90024

},

{

"name": "hemorrhage ",

"type": "DISEASE",

"score": 0.5772

}

]

Embodiments are described above which relate to NER models and these may be applied to any domain using NER in unstructured texts. It should be noted that embodiments may also be used in other kinds of NLP models, such as those for relations extraction, text categorization, topics extraction, etc. For example, in the case of text categorization the texts in a corpus would be annotated with labels of the type of thematic (such as sports, finance, entertainment, health, etc.). One might assume that each text had only one thematic. The decision threshold determination process would be similar, comparing true thematic values in the corpus against predicted values from text categorization models. Similarly, in relations extraction there would be an annotated relationship type for each text (such as disease-drug, organization-product, drug-side effect, etc.), and decision threshold determination might be carried out by comparing the true annotations in the corpus against the predicted values. And similarly for topics extraction.

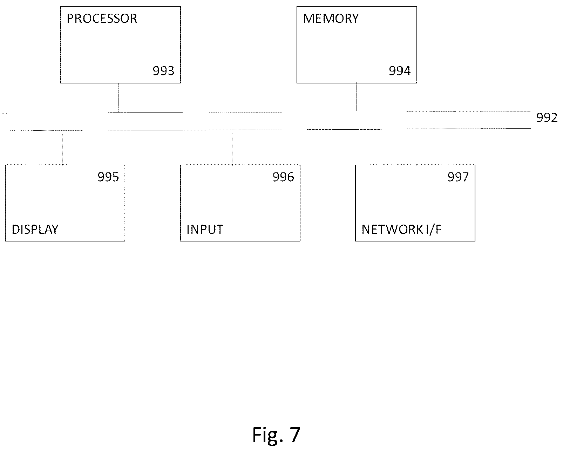

Figure 7 is a block diagram of a computing device, such as a data storage server, which embodies the present invention, and which may be used to implement some or all of the steps of a method of an embodiment, and perform some or all of the tasks of apparatus of an embodiment. For example, the computing device of Figure 7 may be used to implement all, or only some, of steps S1 to S5 of the method illustrated in Figure 2, and to perform some or all of the tasks of the automatic decision threshold determiner 1 and/or text analyser 2 in the apparatus 10 illustrated in Figure 1.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996 and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon, such as texts in corpus 30/300 or unannotated text 40/400. Computer-executable instructions may include, for example, instructions and data accessible by and causing a general purpose computer, special purpose computer, or special purpose processing device (e.g., one or more processors) to perform one or more functions or operations such as all or parts of the methods described with reference to Figure 2, Figure 3, Figure 4 and/or Figure 6. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement some or all of the methods described with reference to Figures 2, 3, 4 and/or 6 and defined in the claims. For example, processor 993 may execute computer program code to implement each of processes P151, P152 and P153 of Figure 4, or only step S4 in whole or in part of Figure 2.

The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device, and may also display a cursor and dialog boxes and screens enabling interaction between a user and the programs and data stored on the computing device.

The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 7. Such a computing device need not have every component illustrated in Figure 7, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

Embodiments may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

The above-described embodiments of the present invention may advantageously be used independently of any other of the embodiments or in any feasible combination with one or more others of the embodiments.

**Claims**

1. A computer-implemented secure natural language processing (NLP) method comprising:

   causing a plurality of independent NLP models, distributed in a decentralized architecture where direct access to data in the NLP models is not permitted for data security or another reason, to analyze a corpus of unstructured texts in which different types of entity are annotated, and receiving first results of the analysis of the NLP models;
   for each entity type annotated in the corpus, automatically determining a decision threshold for each NLP model using the received first results;
   causing the NLP models to analyze an unstructured text in which entities are unannotated and receiving second results of the analysis of the NLP models;
   applying the determined decision thresholds to the second results to determine which of those second results are valid; and
   outputting, in respect of the unannotated unstructured text, the second results determined in the validity determination to be valid.

2. A method as claimed in claim 1, wherein automatically determining a decision threshold comprises:

   for each type of entity annotated in the corpus, comparing the first results provided by the NLP models with the annotations in the corpus to obtain a set of values representing whether or not the entities in the corpus have been correctly identified by the NLP models;
   for each of the entity types for which a set of values has been obtained, using the set of values to determine sensitivity and specificity for each NLP model; and
   using the determined sensitivity and specificity to determine an optimal decision threshold by entity type, for each NLP model, which maximizes correlation between the sensitivity and the specificity.

3. A method as claimed in claim 2, wherein determining an optimal decision threshold by entity type for each NLP model comprises:
calculating an average between the sensitivity and specificity values obtained for the entity type with the NLP model.

4. A method as claimed in claim 3, further comprising calculating the average using weighted sensitivity and specificity values.

5. A method as claimed in any preceding claim, wherein causing the plurality of independent NLP models to analyze a corpus of unstructured texts comprises sending each text in the corpus to each of the NLP models.

6. A method as claimed in any preceding claim, wherein causing the plurality of independent NLP models to analyze an unannotated text comprises sending the unannotated text to each of the NLP models.

7. A method as claimed in any preceding claim, wherein applying the determined decision thresholds to the second results to determine which of those second results are valid comprises:

for each of the second results, using an accuracy value, representing the percentage of valid results provided by the corresponding NLP model, and a confidence measure provided by that NLP model for the result to calculate a score;
for each of the second results, comparing the score calculated for the result with the determined decision threshold for the entity type and NLP model corresponding to the result; and
determining that the result is valid if the score is equal to or greater than the determined decision threshold.

8. Secure natural language processing (NLP) apparatus comprising:

an automatic decision threshold determiner to:

cause a plurality of independent NLP models, distributed in a decentralized architecture where direct access to data in the NLP models is not permitted for data security or another reason, to analyze a corpus of unstructured texts in which different types of entity are annotated, and receive first results of the analysis of the NLP models; and
for each entity type annotated in the corpus, automatically determine a decision threshold for each NLP model using the received first results; and

a text analyzer to:

cause the NLP models to analyze an unstructured text in which entities are unannotated and receive second results of the analysis of the NLP models;
apply the determined decision thresholds to the second results to determine which of those second results are valid; and
output, in respect of the unannotated unstructured text, the second results determined in the validity determination to be valid.

9. Apparatus as claimed in claim 8, wherein the automatic decision threshold determiner automatically determines a decision threshold by:

for each type of entity annotated in the corpus, comparing the first results provided by the NLP models with the annotations in the corpus to obtain a set of values representing whether or not the entities in the corpus have been correctly identified by the NLP models;
for each of the entity types for which a set of values has been obtained, using the set of values to determine sensitivity and specificity for each NLP model; and
using the determined sensitivity and specificity to determine an optimal decision threshold by entity type, for each NLP model, which maximizes correlation between the sensitivity and the specificity.

10. Apparatus as claimed in claim 9, wherein the automatic decision threshold determiner determines an optimal decision threshold by entity type for each NLP model by calculating an average between the sensitivity and specificity values obtained for the entity type with the NLP model.

**11.** Apparatus as claimed in claim 10, wherein at least one of the sensitivity value and the specificity value is weighted in calculating the average.

**12.** Apparatus as claimed in any one of claims 8 to 11, wherein the automatic decision threshold deteminer causes the plurality of independent NLP models to analyze a corpus of unstructured texts by sending each text in the corpus to each of the NLP models.

**13.** Apparatus as claimed in any one of claims 8 to 12, wherein the text analyzer causes the plurality of independent NLP models to analyze an unannotated text by sending the unannotated text to each of the NLP models.

**14.** Apparatus as claimed in any one of claims 8 to 13, wherein the text analyzer determines which of the second results is valid by:

> for each of the second results, using an accuracy value, representing the percentage of valid results provided by the corresponding NLP model, and a confidence measure provided by that NLP model for the result to calculate a score;
> for each of the second results, comparing the score calculated for the result with the determined decision threshold for the entity type and NLP model corresponding to the result; and
> determining that the result is valid if the score is equal to or greater than the determined decision threshold.

**15.** A method or apparatus as claimed in any preceding claim, wherein at least one of the NLP models is a Named Entity Recognition (NER) model.

Amended claims in accordance with Rule 137(2) EPC.

**1.** A computer-implemented secure natural language processing, NLP, method comprising:

> causing (S1) a plurality of independent NLP models (20), distributed in a decentralized architecture where direct access to data in the NLP models (20) is not permitted for data security or another reason, to analyze a corpus (30) of unstructured texts in which different types of entity are annotated, and receiving first results of the analysis of the NLP models (20);
> for each entity type annotated in the corpus (30), automatically determining (S2) a decision threshold for each NLP model (20) using the received first results;
> causing (S3) the NLP models (20) to analyze an unstructured text (40) in which entities are unannotated and receiving second results of the analysis of the NLP models (20);
> applying (S4) the determined decision thresholds to the second results to determine which of those second results are valid; and
> outputting (S5), in respect of the unannotated unstructured text, the second results determined in the validity determination to be valid.

**2.** A method as claimed in claim 1, wherein automatically determining (S2) a decision threshold comprises:

> for each type of entity annotated in the corpus (30), comparing the first results provided by the NLP models (20) with the annotations in the corpus (30) to obtain a set of values representing whether or not the entities in the corpus (30) have been correctly identified by the NLP models (20);
> for each of the entity types for which a set of values has been obtained, using the set of values to determine sensitivity and specificity for each NLP model (20); and
> using the determined sensitivity and specificity to determine an optimal decision threshold by entity type, for each NLP model (20), which maximizes correlation between the sensitivity and the specificity.

**3.** A method as claimed in claim 2, wherein determining an optimal decision threshold by entity type for each NLP model (20) comprises:
calculating an average between the sensitivity and specificity values obtained for the entity type with the NLP model (20).

**4.** A method as claimed in claim 3, further comprising calculating the average using weighted sensitivity and specificity values.

5. A method as claimed in any preceding claim, wherein causing (S1) the plurality of independent NLP models (20) to analyze a corpus (30) of unstructured texts comprises sending each text in the corpus (30) to each of the NLP models (20).

6. A method as claimed in any preceding claim, wherein causing (S3) the plurality of independent NLP models (20) to analyze an unannotated text (40) comprises sending (S251) the unannotated text (40) to each of the NLP models (20).

7. A method as claimed in any preceding claim, wherein applying (S4) the determined decision thresholds to the second results to determine which of those second results are valid comprises:

for each of the second results, using (S252) an accuracy value, representing the percentage of valid results provided by the corresponding NLP model, and a confidence measure provided by that NLP model for the result to calculate a score;
for each of the second results, comparing (S253) the score calculated for the result with the determined decision threshold for the entity type and NLP model (20) corresponding to the result; and
determining (S254) that the result is valid if the score is equal to or greater than the determined decision threshold.

8. Secure natural language processing, NLP, apparatus (10) comprising:

an automatic decision threshold determiner (1) to:

cause a plurality of independent NLP models (20), distributed in a decentralized architecture where direct access to data in the NLP models (20) is not permitted for data security or another reason, to analyze a corpus (30) of unstructured texts in which different types of entity are annotated, and receive first results of the analysis of the NLP models (20); and
for each entity type annotated in the corpus (30), automatically determine a decision threshold for each NLP model (20) using the received first results; and

a text analyzer (2) to:

cause the NLP models (20) to analyze an unstructured text (40) in which entities are unannotated and receive second results of the analysis of the NLP models (20);
apply the determined decision thresholds to the second results to determine which of those second results are valid; and
output, in respect of the unannotated unstructured text (40), the second results determined in the validity determination to be valid.

9. Apparatus as claimed in claim 8, wherein the automatic decision threshold determiner (1) automatically determines a decision threshold by:

for each type of entity annotated in the corpus (30), comparing the first results provided by the NLP models (20) with the annotations in the corpus (30) to obtain a set of values representing whether or not the entities in the corpus (30) have been correctly identified by the NLP models (20);
for each of the entity types for which a set of values has been obtained, using the set of values to determine sensitivity and specificity for each NLP model (20); and
using the determined sensitivity and specificity to determine an optimal decision threshold by entity type, for each NLP model (20), which maximizes correlation between the sensitivity and the specificity.

10. Apparatus as claimed in claim 9, wherein the automatic decision threshold determiner (1) determines an optimal decision threshold by entity type for each NLP model (20) by calculating an average between the sensitivity and specificity values obtained for the entity type with the NLP model (20).

11. Apparatus as claimed in claim 10, wherein at least one of the sensitivity value and the specificity value is weighted in calculating the average.

12. Apparatus as claimed in any one of claims 8 to 11, wherein the automatic decision threshold determiner (1) causes the plurality of independent NLP models (20) to analyze a corpus (30) of unstructured texts by sending each text in the corpus (30) to each of the NLP models (20).

**13.** Apparatus as claimed in any one of claims 8 to 12, wherein the text analyzer (2) causes the plurality of independent NLP models (20) to analyze an unannotated text (40) by sending the unannotated text (40) to each of the NLP models (20).

**14.** Apparatus as claimed in any one of claims 8 to 13, wherein the text analyzer (2) determines which of the second results is valid by:

> for each of the second results, using an accuracy value, representing the percentage of valid results provided by the corresponding NLP model (20), and a confidence measure provided by that NLP model (20) for the result to calculate a score;
> for each of the second results, comparing the score calculated for the result with the determined decision threshold for the entity type and NLP model (20) corresponding to the result; and
> determining that the result is valid if the score is equal to or greater than the determined decision threshold.

**15.** A method or apparatus as claimed in any preceding claim, wherein at least one of the NLP models (20) is a Named Entity Recognition, NER, model.

Fig. 1

S1: cause NLP models to analyze corpus and receive first results
of the analysis

S2: for each entity type annotated in the corpus, automatically
determine a decision threshold for each NLP model using the
first results

S3: cause the NLP models to analyze an unannotated text and
receive second results of the analysis of the NLP models

S4: apply the determined decision thresholds to the second
results to determine which of those second results are valid

S5: output, in respect of the unannotated text, the second results
determined to be valid

Fig. 2

Fig. 3

200

API NER model 1

API NER model 2

API NER model n

**Automatic Decision Threshold Engine 15**

Evaluate & Calculate Confusion Matrix

P151

Obtain ROC Analysis

P152

Determine Threshold

P153

Cross-domain Gold Standard corpus 300

Each member of the matrix will be the decision threshold of each NER and by entity type

Matrix of Decision Thresholds 500 (Float numbers)

Fig. 4

Confusion Matrix 1000

| Observed Class | | Predicted Class | |
|---|---|---|---|
| | | No | Yes |
| | No | TN | FP |
| | Yes | FN | TP |

TN    True Negative
FP    False Positive
FN    False Negative
TP    True Positive

**Model Performance**

Accuracy      = (TN+TP)/(TN+FP+FN+TP)

Precision     = TP/(FP+TP)

Sensitivity   = TP/(TP+FN)

Specificity   = TN/(TN+FP)

Observed Class = real values

Fig. 5

S251: send unannotated text(s) to NER models and receive second results

S252: for each of the second results, use an accuracy value for the corresponding NLP model and a confidence measure provided by that NLP model for the result to calculate a score

S253: for each of the second results, compare the score calculated for the result with the determined decision threshold for the entity type and NLP model corresponding to the result

S254: determine that the result is valid if the score is equal to or greater than the determined decision threshold

Fig. 6

Fig. 7

PROCESSOR 993

MEMORY 994

992

997 NETWORK I/F

996 INPUT

995 DISPLAY

Europäisches
Patentamt

European
Patent Office

Office européen
des brevets

**EUROPEAN SEARCH REPORT**

Application Number

EP 20 38 2188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/060848 A1 (LIU XIAOHU [US] ET AL) 2 March 2017 (2017-03-02) * paragraphs [0003] - [0006], [0021], [0022] * * paragraphs [0023] - [0038]; figure 1 * * paragraphs [0039] - [0042]; figure 2 * * paragraphs [0043] - [0047]; figure 3 * * paragraphs [0048] - [0057]; figure 4 * * figure 5 * | 1-15 | INV. G06F40/295 |
| A | Anonymous: "F1 score", Wikipedia, 4 March 2020 (2020-03-04), XP055729962, Retrieved from the Internet: URL:https://en.wikipedia.org/w/index.php?title=F1_score&oldid=943881524 [retrieved on 2020-09-11] * page 1 - page 3 * | 1-15 | |
| A | Bogdan Sacaleanu ET AL: "An Adaptive Framework for Named Entity Combination", Proceedings of LREC 2012, Eighth International Conference on Language Resources and Evaluation, 21 May 2012 (2012-05-21), pages 1244-1249, XP055327272, Istanbul, Turkey Retrieved from the Internet: URL:http://www.lrec-conf.org/proceedings/lrec2012/pdf/411_Paper.pdf [retrieved on 2016-12-08] * abstract * * sections 1-6; figures 1-4; tables 1-2 * | 1-15 | TECHNICAL FIELDS SEARCHED (IPC) G06F |

-/--

The present search report has been drawn up for all claims

| Place of search | Date of completion of the search | Examiner |
|---|---|---|
| Berlin | 11 September 2020 | Chéron, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 38 2188

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 190 055 B1 (KISS IMRE ATTILA [US] ET AL) 17 November 2015 (2015-11-17)<br>* column 2, line 15 - column 3, line 3 *<br>* column 4, line 3 - column 4, line 61; figure 1 *<br>* column 5, lines 4-8 *<br>* column 5, lines 27-67 *<br>* column 6, line 25 - column 6, line 49; figure 2 *<br>* column 7, lines 3-15 *<br>* column 4, line 43 - column 4, line 38; figure 4 *<br>* column 9, line 16 - column 10, line 29; figures 5-6 *<br>* column 13, line 29 - column 15, line 15; figures 9-10 *<br>----- | 1-15 | |
| A | US 2011/213742 A1 (LEMMOND TRACY D [US] ET AL) 1 September 2011 (2011-09-01)<br>* paragraphs [0041], [0042], [0052] - [0056]; figure 13 *<br>* paragraphs [0057] - [0064], [0073] - [0074]; figures 14,2,3 *<br>----- | 1-15 | |
| A | DUONG D ET AL: "Support Vector Machines to Weight Voters in a Voting System of Entity Extractors",<br>INTERNATIONAL JOINT CONFERENCE ON NEURAL NETWORKS, 2006. IJCNN '06, PISCATAWAY, NJ : IEEE OPERATIONS CENTER, PISCATAWAY, NJ, USA,<br>16 July 2006 (2006-07-16), pages 1226-1230, XP010948157,<br>DOI: 10.1109/IJCNN.2006.1716242<br>ISBN: 978-0-7803-9490-2<br>* abstract *<br>* page 1226 - page 1227, right-hand column, line 27 *<br>----- | 1-15 | TECHNICAL FIELDS SEARCHED (IPC) |

The present search report has been drawn up for all claims

| Place of search | Date of completion of the search | Examiner |
|---|---|---|
| Berlin | 11 September 2020 | Chéron, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 20 38 2188

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2020

| Patent document cited in search report | | Publication date | Patent family member(s) | | Publication date |
|---|---|---|---|---|---|
| US 2017060848 | A1 | 02-03-2017 | CN | 107924393 A | 17-04-2018 |
| | | | EP | 3345100 A1 | 11-07-2018 |
| | | | US | 2017060848 A1 | 02-03-2017 |
| | | | US | 2017286404 A1 | 05-10-2017 |
| | | | WO | 2017040436 A1 | 09-03-2017 |
| US 9190055 | B1 | 17-11-2015 | NONE | | |
| US 2011213742 | A1 | 01-09-2011 | NONE | | |

EPO FORM P0459

For more details about this annex : see Official Journal of the European Patent Office, No. 12/82